# EUROPEAN PATENT APPLICATION

(11) **EP 4 823 091 A1**
(43) Date of publication of application: **14.10.2026**
(21) Application number: 25315122.9
(22) Date of filing: 07.04.2025
(51) Int. Cl.: H04N 19/105, H04N 19/11, H04N 19/136, H04N 19/593, H04N 19/70

(54) **METHOD AND APPARATUS FOR PROCESSING A PICTURE USING A CONTENT-CONFIGURED FUSION-BASED PREDICTION PROCESS**

(71) Applicant: Beijing Xiaomi Mobile Software Co., Ltd., Beijing Beijing 100085 (CN)
(72) Inventor: Ghaznavi Youvalari, Ramin, Beijing, 100085 (CN); Tissier, Alexandre, Beijing, 100085 (CN); Abdoli, Mohsen, Beijing, 100085 (CN); Plowman, Frank, Beijing, 100085 (CN)
(74) Representative: Pfitzner, Hannes

(57) **Abstract**

The present disclosure provides a method of processing one or more blocks of a picture, the method comprising:
predicting a block of the picture using a fusion-based prediction process,
wherein the fusion-based prediction process is configured dependent on a content of the block or picture or dependent on signaling (e.g. first signaling or second signaling).

## Description

### Technical Field

The present disclosure generally relates to the field of encoding/decoding pictures, images or videos, and embodiments of the present disclosure concern improvements for obtaining a prediction for a block of a picture based on blending or fusing two or more prediction signals. More specific embodiments of the present disclosure relate to the methods and apparatus for processing a picture predict a block of a picture using fusion methods that obtain a prediction for the block using a process for blending or fusing two or more prediction signals, which is configured dependent on a content of the block or picture.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding of the picture, the image or the video, a state-of-the-art process may predict a block of a picture using fusion methods that obtain a prediction for the block based on blending or fusing two or more prediction signals.

Thus, there is a need to provide further improvements for processing a picture, an image or a video, e.g., when encoding and/or decoding of the picture, the image or the video.

### Summary

The present disclosure provides a method of processing one or more blocks of a picture, the method comprising:
predicting a block of the picture using a fusion-based prediction process,
wherein the fusion-based prediction process is configured dependent on a content of the block or picture or dependent on signaling (e.g. first signaling or second signaling).

According to an embodiment, in case the content of the block or picture is of a first predefined type, like a simple content, for example, screen content, gaming content, or content with very smooth texture, the fusion-based prediction process derives and uses a single prediction for the block; or
wherein, in case the content of the block or picture is of a first predefined type, like a simple content, for example, screen content, gaming content, or content with very smooth texture, the fusion-based prediction process derives and uses a single prediction for the block, wherein a best performing prediction of the fusion-based prediction process is selected and used as the single prediction for the prediction of the block.

According to an embodiment, the best performing prediction is determined implicitly.

According to an embodiment, best performing prediction is determined responsive to at least one of
- a first signaling, e.g., in a data stream, indicating that the fusion-based prediction process is to be used for predicting the block, and
- a second signaling, e.g., a flag or HLS flag or HLS control flag or other signal in the data stream, indicating whether or not a single prediction is to be used.

According to an embodiment,, responsive to the first signaling, a plurality of predictions are obtained using the fusion-based prediction process; and/or responsive to the second signaling, one or more of the plurality of predictions are used for the prediction of the block.

According to an embodiment, when the second signaling has a first value indicating that the single prediction is to be used,
- the best performing prediction is selected from the plurality of predictions,
- a block prediction is obtained using the best performing prediction, and
- the block is reconstructed using the block prediction and a block residual; and/or wherein, when the second signaling has a second value indicating that no single prediction is to be used,
- a predefined number (N) of the best performing predictions are selected from the plurality of predictions,
- one or more fusion weights are determined,
- N block predictions are obtained using the N best performing predictions,
- a block prediction is obtained by combining the N block predictions using the one or more fusion weights, and
- the block is reconstructed using the block prediction and a block residual.

According to an embodiment, the best performing prediction is determined explicitly.

According to an embodiment, responsive to determining the best performing prediction from a plurality of predictions using the fusion-based prediction process, an indication of the best performing prediction is provided, e.g., in a data stream using a CU-level flag or index.

According to an embodiment, the indication of the best performing prediction is obtained responsive to
- a first signaling, e.g., in the data stream, indicating that the fusion-based prediction process is to be used for predicting the block, and
- a second signaling, e.g., in the data stream, having a first value indicating that the single prediction is to be used.

According to an embodiment, responsive to the second signaling having the first value,
- the data stream is parsed for the indication of the best performing prediction,
- a block prediction is obtained using the indicated best performing prediction among the N predefined predictions, and
- the block is reconstructed using the block prediction and a block residual; and/or
wherein, responsive to the second signaling having a second value indicating that the single prediction is not to be used,
- the data stream is not parsed for the indication of the best performing prediction,
- a predefined number (N) of the best performing predictions are obtained using the fusion-based prediction process,
- one or more fusion weights are determined,
- N block predictions are obtained using the N best performing predictions,
- a block prediction is obtained by combining the N block predictions using the one or more fusion weights, and
- the block is reconstructed using the block prediction and a block residual.

According to an embodiment, in case the content of the block or picture is of a second predefined type, like a camera captured or natural content or content with difficult texture, such as camera captured, noisy (e.g., camera noise or film grain noise), high motion etc., the fusion-based prediction process derives a plurality or set of predictions.

According to an embodiment, for predicting the block of the picture, one of a plurality of different fusion-based prediction processes is used, and wherein predictions for the block are generated by the different fusion-based prediction processes such that between the different fusion-based prediction processes there are no overlapping or repeating predictions;
OR
wherein, for predicting the block of the picture, one of a plurality of different fusion-based prediction processes is used, and wherein the one or more unused fusion-based prediction processes are
   - disabled so that no predictions are provided, or
   - modified such that a number of predictions is reduced;
   OR
wherein, in case a single prediction of the one fusion-based prediction process is used, the one fusion-based prediction process is disabled.

According to an embodiment, for predicting the block of the picture, one of a plurality of different fusion-based prediction processes is used, and wherein, in case a single prediction of the one fusion-based prediction process is used, one or more of the predictions derived by the one fusion-based prediction process are used when processing the block using one of the other fusion-based prediction processes.

According to an embodiment, when using a single prediction of the fusion-based prediction process, a context coding of the associated information of the prediction is changed when compared to using all predictions of the fusion-based prediction process.

According to an embodiment, the changed context coding comprises one or more of the following:
- use of a different context initialization for the information of the prediction,
- use of a different binarization for the information of the prediction,
- use of a different coding mechanism for the information of the prediction,
- change of an order of signaling, e.g., of one or more of CU-level information.

The technical solutions provided according to embodiments of the present disclosure have the following beneficial effects.

A state-of-the-art process, for processing a picture, an image or a video, e.g., when encoding and/or decoding of the picture, the image or the video, may apply prediction methods that typically blend multiple predictions in order to obtain the final block prediction. Such blending methods may not be optimal when used on a block or picture having a certain content so that the prediction performance is degraded or not optimal.

Embodiments of the present disclosure address the above shortcomings in the prior art by using a fusion-based prediction processes that is configured based on a content of the block or picture.

The present disclosure is advantageous because fusion prediction methods may also be used for content with simple texture characteristics, thereby exploiting the benefits of the intra fusion methods, i.e., providing a better prediction accuracy, while avoiding a sub-optimal prediction performance.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates an SGPM block being split into respective partitions according to certain partition mode;
- Fig. 4: illustrates a plurality of possible partition modes;
- Fig. 5(A)-Fig. 5(B): illustrate the signaling the partition split and the two intra prediction modes for a SGPM block;
- Fig. 6: illustrates a SGPM template used for reordering a candidate list for SGPM;
- Fig. 7: illustrates a PGM blending;
- Fig. 8: illustrates non-adjacent spatial neighboring blocks used in the generation of an occurrence-based intra coding (OBIC) mode's histogram generation,
- Fig. 9: illustrates template-based intra mode derivation (TIMD) templates for a cost calculation or determination,
- Fig. 10: illustrates a template area for a template-based multiple reference line intra prediction (TMRL) mode,
- Fig. 11(A)-Fig. 11(B): illustrate a collocated luma block and an adjacent chroma block used in chroma TMRL,
- Fig. 12(A)-Fig. 12(B): illustrate the template areas of a collocated luma block and an adjacent chroma block used in chroma TMRL,
- Fig. 13: illustrates for a currently processed block of a picture neighboring blocks used in a derivation of a general MPM list,
- Fig. 14: illustrates a flow diagram of a method of processing one or more blocks of a picture in accordance with embodiments of the present disclosure,
- Fig. 15: illustrates a DIMD mode derivation in presence of *sps_single_ipm_dimd_flag* in accordance with embodiments of the present disclosure,
- Fig. 16: illustrates a DIMD mode derivation in the presence of a limit flag, *sps_limit_ipm_dimd_flag,* in accordance with embodiment, of the present disclosure,
- Fig. 17: illustrates a flow diagram of a method for decoding an encoded data stream in accordance with embodiments of the present disclosure,
- Fig. 18: illustrates a flow diagram of a method for encoding a picture into an encoded data stream in accordance with embodiments of the present disclosure,
- Fig. 19: illustrates a block diagram of an apparatus of processing one or more blocks of a picture in accordance with embodiments of the present disclosure,
- Fig. 20: illustrates a block diagram of a decoder for decoding an encoded data stream in accordance with embodiments of the present disclosure,
- Fig. 21: illustrates a block diagram of an encoder for encoding a picture into an encoded data stream in accordance with embodiments of the present disclosure,
- Fig. 22: illustrates a data stream in accordance with embodiments of the present disclosure, and
- Fig. 23: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

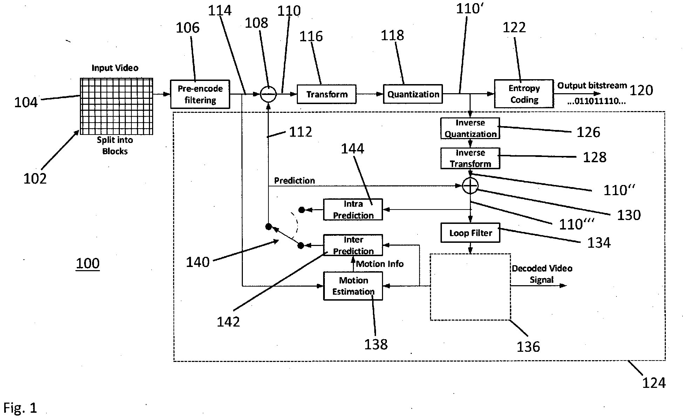

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

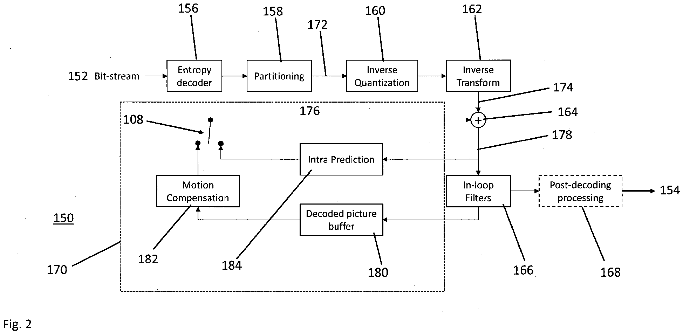

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

In the following a brief description of ECM and VVC/VTM tools, e.g., for chroma prediction is provided, which are described in more detail in the JVET-AG2025 and JVET-T2002 documents.

### Spatial Geometric partitioning mode (SGPM)

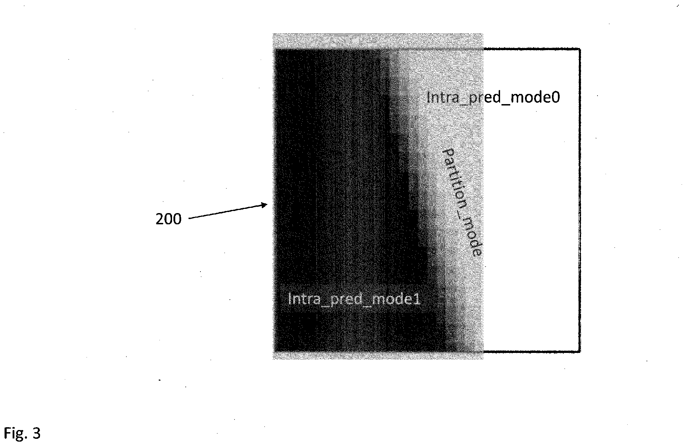

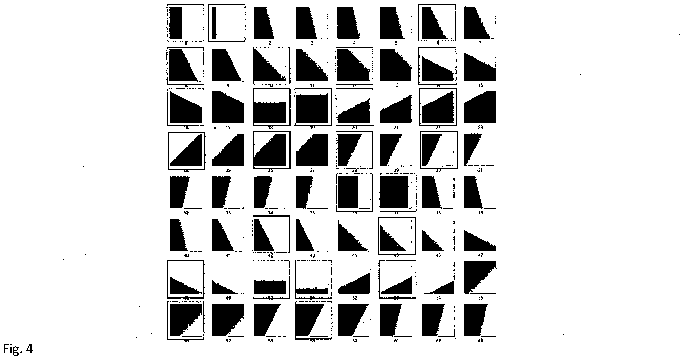

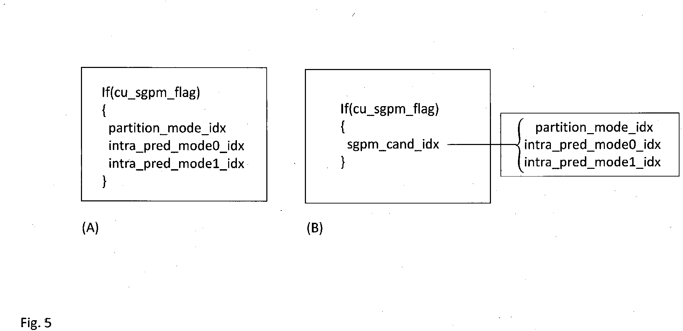

SGPM is an intra mode that resembles the inter coding tool of the Geometric Partitioning Mode (GPM), where the two prediction parts are generated from an intra predicted process. In this mode, a candidate list is built with each entry containing one partition split and two intra prediction modes. Fig. 3 illustrates an SGPM block 200 being split into partition 0 and partition 1 according to certain partition mode. Each partition has associated there with a prediction mode, like the IPM intra_pred_mode0 for partition 0, and the IPM intra_pred_mode1 for partition 1. Among a plurality of partition modes illustrated in Fig. 4, 26 partition modes may be used for SGPM (see the modes surrounded by the squares), namely partition modes 0, 1, 6, 8, 10, 12, 14, 16, 18, 19, 20, 22, 24, 26, 28, 30, 36, 37, 42, 43, 48, 50, 51, 53, 56, 59. The 26 partition modes and 3 of intra prediction modes are used to form the candidate list of combinations. The length of the candidate list may be set 16, and the selected candidate index is signaled. Fig. 5(A) and Fig. 5(B) illustrate the signaling the partition split and the two intra prediction modes for a SGPM block. When SGPM is used for processing a current block or CU, the flag cu_sgpm_flag is set, e.g., in a data stream or bitstream. As is illustrated in the example of Fig. 5(A), responsive to the flag cu_sgpm_flag being set, the partition mode partition_mode_idx, the IPM intra_pred_mode0 for partition 0, and the IPM intra_pred_mode1 for partition 1 are signaled for the SGPM block 200. In the example of Fig. 5(B), responsive to the flag cu_sgpm_flag being set, rather than signaling the partition mode partition_mode_idx, the IPM intra_pred_mode0 for partition 0, and the IPM intra_pred_mode1 for partition 1 are signaled, a selected index spqm_cand_idx of the candidate list is signaled. The indexed candidate list entry holds for the SGPM block 200 the partition mode partition_mode_idx, the IPM intra_pred_mode0 for partition 0, and the IPM intra_pred_mode1 for partition 1.

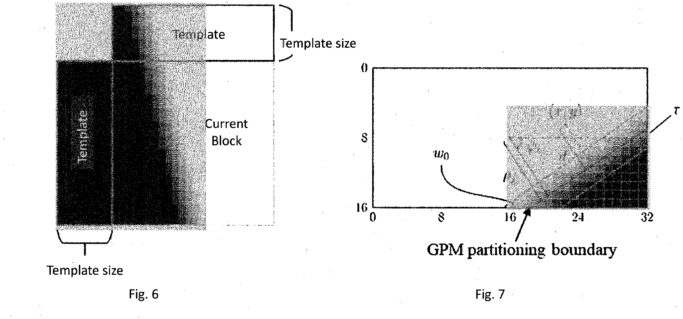

The candidate list may be reordered using a template (see Fig. 6) where a Sum of Absolute Difference (SAD) between the prediction and reconstruction of the template is used for ordering. The template size may be fixed to 1.

For each partition mode, an IPM list is derived for each part using the same intra-inter GPM list derivation. The IPM list size is set to 3. In the list, a template-based intra mode derivation (TIMD) derived mode is replaced by 2 derived modes with horizontal and vertical orientations. The list may be further augmented with block-vector based prediction candidates obtained from the adjacent and non-adjacent merge candidates coded in intra template matching prediction (IntraTMP) or in intra block copy (IBC) prediction mode. The template cost is employed to select the up to 6 block vectors. The final list contains up to 9 predictors: 3 regular intra modes and up to 6 block vectors-based predictors.

The SGPM mode may be applied with a restricted blocks size: 4<=width<=64, 4<=height<=64, width<height*8, height<width*8, width*height>=32.

A Picture Parameter Set (PPS) flag may be coded to indicate whether no blending of two intra predictions is allowed. When the PPS flag is set to false, the following adaptive blending is also used for spatial GPM, with the blending depth τ shown in Fig. 7 being derived as follows:
- If min(width, height)==4, ½ τ is selected
- else if min(width, height)==8, τ is selected
- else if min(width, height)==16, 2 τ is selected
- else if min(width, height)==32, 4 τ is selected
- else, 8 τ is selected.

Otherwise (the PPS flag is set to true), ¼ τ is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

### Decoder side intra mode derivation (DIMD)

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination $Orient = {G}_{y} / {G}_{x}$ is obtained, e.g., computed by the following LUT-based scheme: $x = Floor \left(Log2\left(Gx\right)\right)$ $normDiff = \left(\left(Gx≪4\right)≫x\right) & 15$ $x + = \left(3+\left(normDiff!=0\right)?1:0\right)$ $Orient = \left(Gy*\left(DivSigTable\left[normDiff\right]\left|8\right.\right)+\left(1≪\left(x-1\right)\right)\right) ≫ x$ where $DivSigTable \left[16\right] = \left\{0, 7, 6, 5, 5, 4, 4, 3, 3, 2, 2, 1, 1, 1, 1, 0\right\} .$

For a block of size *W* × *H,* the weight for each of the five derived modes is modified if one of the above or left histogram magnitudes is twice as large as the other one. In this case, the weights are location dependent and computed as follows:
If the above histogram is twice the left, then: ${w}_{i} \left(x, y\right) = {wDimd}_{i} + {Δ}_{i} - 2 {Δ}_{i} \frac{y}{\left(H-1\right)} .$
If the left histogram is twice the above, then: ${w}_{i} \left(x, y\right) = {wDimd}_{i} + {Δ}_{i} - 2 {Δ}_{i} \frac{x}{\left(W-1\right)} ,$
where *wDimdᵢ* is the unmodified uniform weight of the DIMD selected as in JVET-O0449, Δ*ᵢ* is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, it is noted note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

### Occurrence-based intra coding (OBIC)

The occurrence-based intra coding (OBIC), proposed in JVET-AH0076, derives the intra prediction modes of the current block based on the sample-wise occurrence of the intra modes in the spatial neighborhood of the block. For this, adjacent and non-adjacent spatial neighboring blocks are checked and the intra prediction modes of the blocks are collected into an occurrence histogram. Instead of a Histogram of Gradients (HoGs) as in DIMD, the OBIC method uses a Histogram of Occurrences, which consists of the intra modes and their sample-wise occurrences. The occurrence values are calculated based on the number of samples that are coded in a certain intra prediction mode in that neighborhood. For example, if a uiWidth × uiHeight block is coded with an IPM mode, the occurrence of the mode in that block is calculated as: $Histogram \left[IPM\right] + = uiWidth \times uiHeight ;$ where uiWidth and uiHeight are the width and height of a spatial neighboring block.

The occurrences of the existing modes from the spatial neighborhood blocks are accumulated into the histogram.

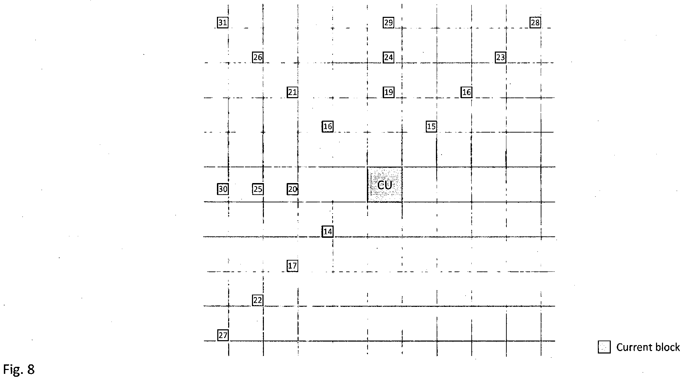

Fig. 8 illustrates non-adjacent spatial neighboring blocks that are used in the OBIC mode's histogram generation. Up to five angular modes with the highest occurrence along with the planar mode or block vector-based prediction (same as in DIMD) are selected from the histogram and used for a final prediction by blending the prediction of the selected modes.

Some blocks, mentioned below, use more than one intra mode for prediction. In such cases, all the intra modes of such blocks are selected and used when creating the OBIC histogram:
- DIMD: up to 5 angular modes
- TIMD: up to 2 modes
- SGPM: 2 modes
- OBIC: up to 5 angular modes

Moreover, the virtual intra prediction modes (VIPMs) of the following blocks are considered only in inter slices when creating the histogram of the OBIC mode:
- MIP block
- IntraTMP block
- EIP block

The blending weights are calculated similar to the DIMD mode, but instead of using gradient values from the template, the occurrence values are used for the OBIC. Moreover, the planar mode's weight is also decided similar to DIMD mode.

The OBIC mode is used as a sub-mode of the DIMD tool and is applied only to luma blocks. Moreover, the mode is disabled for blocks that have less than 64 samples.

### Fusion for template-based intra mode derivation (TIMD)

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:
- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$

Otherwise, the non-angular intra prediction mode is not used in the prediction.

The costs of the two selected modes are compared with a threshold, and the cost factor of 2 may be applied as follows: $costMode 2 < 2 * costMode 1 .$

If this condition is true, the fusion is applied, otherwise only mode1 is used.

The weights of the modes are computed from their SATD costs as follows: $weight 1 = costMode 2 / \left(costMode1+costMode2\right)$ $weight 2 = 1 - weight 1$

The division operations are conducted using the same lookup table (LUT) based integerization scheme used by the CCLM.

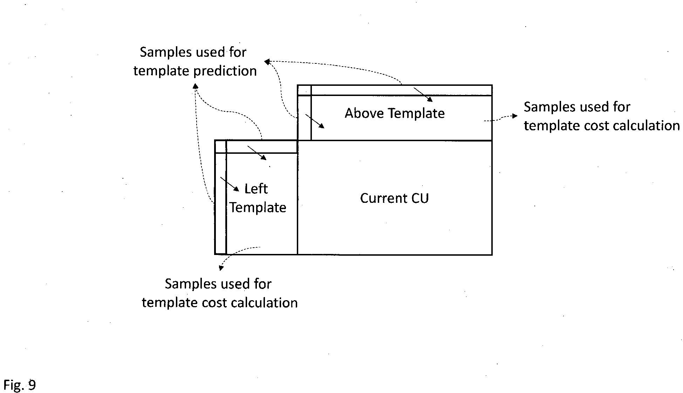

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 9 illustrating the TIMD templates for the cost determination or calculation.

### Template-based multiple reference line intra prediction

The template-based multiple reference line intra prediction (TMRL) mode combines reference line and prediction mode together and uses a template matching method to construct a list of candidate combinations. An index to the candidate combination list is coded to indicate which reference line and prediction mode is used in coding the current block.

The TMRL mode extends the reference line candidate list and the intra-prediction-mode candidate list. The extended reference line candidate list is {1, 3, 5, 7, 12}. The restriction on the top CTU row is unchanged. The size of the intra-prediction-mode candidate list is 10. The construction of the intra-prediction-mode candidate list is similar to MPM except the Planar mode is excluded from the intra-prediction-mode candidate list, DC mode is added after 5 neighboring PUs' modes and DIMD modes if it's not included and the angular modes with delta angles from ±1 to ±4 (compared the existing angular modes in the intra-prediction-mode candidate list) are added. The precision of angular prediction is extended from 65 to 129. Additionally non-adjacent positions are added as candidates in constructing the intra candidate list. If the neighboring or non-adjacent blocks are coded with SGPM (Spatial Geometric Partition Mode)or GPM (Geometric Partitioning Mode), the intra modes of the blocks are replaced by the partitioning angles.

The TMRL candidate is constructed as follows. There are 5x10=50 combinations of the extended reference line and the allowed intra-prediction modes for a block. Since the extended reference line starts from reference line 1, the area covered by reference line 0 is used for template matching. The SAD costs over the template area are calculated between the predictions (generated by 50 combinations) and the reconstructions. The 20 combinations with the least SAD cost are selected in an ascending order to form the TMRL candidate list.

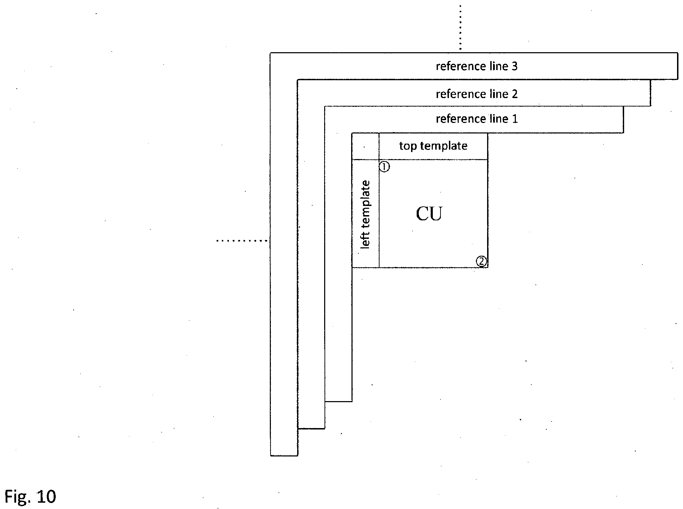

Fig. 10 illustrates the template area for the TMRL mode. Regarding TMRL signaling, instead of coding the reference line and the intra mode directly, an index to the TMRL candidate list is coded to indicate which combination of reference line and prediction mode is used for coding the current block.

### Chroma TMRL

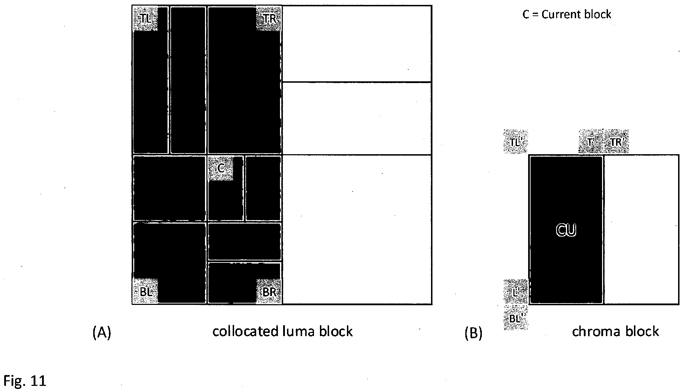

For the chroma TMRL mode reference lines 1, 3, 5 and 8 intra prediction mode candidates are used, with a total of 3x8=24 combinations, and the intra mode candidates are derived as follows:
- The non-Cross-Component Prediction (non-CCP) chroma intra prediction modes in the current ECM including directional mode (DM), chroma DIMD, DC;
- The collocated luma modes: the intra prediction modes from luma blocks in the positions of TL, TR, BL and BR in the collocated luma block. Fig. 11(A) illustrates the collocated luma block as well as the mentioned positions of top left (TL), top right (TR), bottom left (BL) and bottom right (BR);
- The adjacent chroma modes: the intra prediction modes from adjacent chroma blocks in the positions of L', T', BL', TR', and TL'. Fig. 11(B) illustrates the adjacent chroma block as well as the mentioned positions of left (L'), top (T'), bottom left (BL'), top left (TL') and top right (TR).

Some default intra modes will be added if the intra-prediction-mode candidate list is not filled fully with the above chroma modes. The default intra modes are the first angular mode in the intra-prediction-mode candidate list shifted with {-1, +1, -2, +2, ...}. To remove redundant intra prediction mode in the list, a pruning operation is applied. It is noted that the CCP mode, the planar mode, and the Direct Block Vector (DBV) mode are excluded from the intra-prediction-mode candidate list.

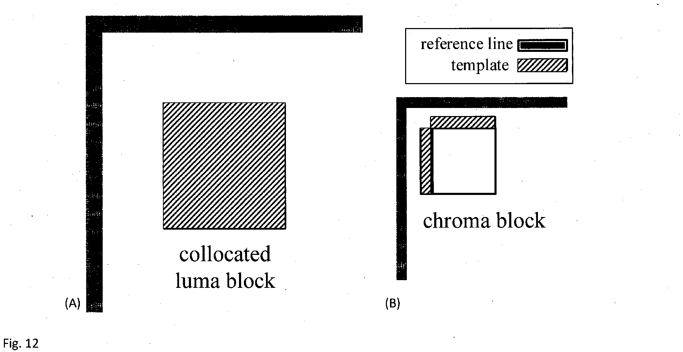

Combination candidates from the list are used to predict the collocated luma block and the template of the current chroma block. This template includes one top row and one left column of the current chroma block as shown in Fig. 12(A)-Fig. 12(B) illustrating the template areas of a collocated luma block and an adjacent chroma block used in chroma TMRL. The SATD cost between the prediction and the reconstructed samples is then calculated for the collocated luma block and chroma templates. The candidates in the list are reordered based on a combined SATD cost, with the cost determined or calculated as follows: $\begin{matrix}cost = 8 ∗ costY + \left({costCb}_{Top}+{costCr}_{Top}\right) \\ ≪ \left(logH+2\right) + \left({costCb}_{Left}+{costCr}_{Left}\right) ≪ \left(logW+2\right)\end{matrix}$

The first 6 combination candidates with the smallest cost are used.

A chroma TMRL flag may be signaled to indicate whether the chroma TMRL mode is applied or not. If the chroma TMRL mode is applied, an index is signaled to indicate which combination candidate in the list is used.

### Angular Intra Prediction Mode (IPM) in VVC and ECM

A set of 67 Intra Prediction Modes (IPMs) exists both in VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

The angular intra prediction modes may be signaled through a Most Probable Mode (MPM) list and a non-MPM list.

### Most Probable Mode (MPM) and non-MPM lists

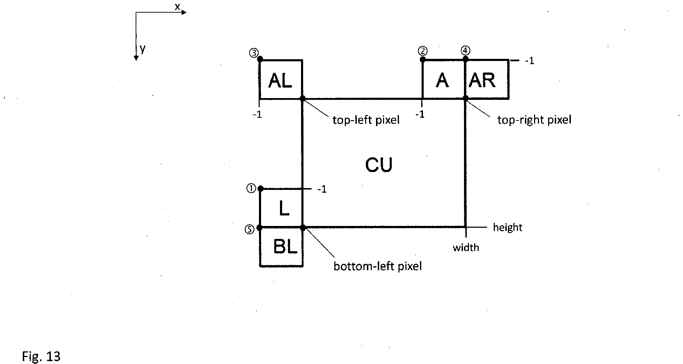

An MPM list may include a primary MPM (PMPM) list comprising 6 entries and a secondary MPM (SMPM) list, as described in JVET-D0114, including 16 entries. A general MPM list with 22 entries is constructed first, and then the first 6 entries in this general MPM list are included into the PMPM list, and the rest of entries of the general MPM list form the SMPM list. The first entry in the general MPM list is the Planar mode. The remaining entries are composed of the intra modes of the left (L), above (A), below-left (BL), above-right (AR), and above-left (AL) neighboring blocks of a currently processed or predicted block and DIMD modes which are sorted in ascending order of Sum of Absolute Difference (SAD) cost. Fig. 13 illustrates for a currently processed block CU the neighboring blocks L, A, BL, AR, AL used in the derivation of the general MPM list. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed.

In this disclosure, the terms left (L), above (A), above-left (AL), above-right (AR) and below-left (BL) are defined as position based on the current block position. The position of the current block is depicted in x, y coordinates with respect to the position of the first pixel, the top-left pixel of the current block, from the current block within the picture. Based on that x, y position of the top-left pixel, offsets are computed to obtain the positions ① to ⑤ of the reconstructed blocks L, A, AL, AR and BL. As may be seen, the reconstructed blocks L, A, AL, AR and BL are all adjacent or abutting respective corners of the currently processed block, more specifically, corners corresponding to the top-left pixel position, the top-right pixel position and the bottom-left pixel position. Relative to the x, y position of the top-left pixel, the offsets of the positions ① to ⑤ are as follows:
①: (-1, height - 1),
②: (width - 1, -1),
③: (-1, -1),
④ (width, -1),
⑤: (-1, height).

The blocks within these pixel positions are considered as L, A, AL, AR and BL neighboring or adjacent blocks.

If a CU block is vertically oriented, the order of neighboring blocks is A, L, BL, AR, AL; otherwise, it is L, A, BL, AR, AL.

The MPM list is equally divided into four groups and the group index is parsed first. Then, a mode index is further parsed to indicate which mode in the selected group is used.

As described above, intra fusion methods, such as DIMD, TIMD and OBIC, typically blend multiple predictions in order to obtain the final block prediction. Such blending methods provide better prediction accuracy for content with complex texture characteristics such as natural or camera captured content. However, it has been found that such blending mechanisms may not be optimal when used in content with simple texture characteristics (e.g. sharp edges) such as screen content. Thus, such methods either are not used (e.g., may be fully disabled or not selected by a rate-distortion optimization of an encoder), or provide sub-optimal prediction performance.

Embodiments of the present disclosure address the above shortcomings by providing approaches for improving a prediction performance of fusion-based prediction processes based on a content, like fusion-based intra prediction processes such as DIMD, TIMD and OBIC, or a fusion using block-vector based (BV-based) predictions such as an intra template matching prediction (IntraTMP) or an intra block copy (IBC) prediction.

Embodiments of the present disclosure propose to use a content-dependent configuration for various aspects of fusion-based prediction processes. The content-dependent configuration may include several aspects, for example:
- a number of fusion modes
- an interaction of the fusion-based prediction processes derivation methods with other processes in the codec

Embodiments of the present disclosure are advantageous as they allow for the use of fusion-based prediction processes, with a different configuration, also for content with simple texture characteristics, thereby exploiting the benefits of such methods, i.e., providing a better prediction accuracy, while avoiding a sub-optimal prediction performance.

In this disclosure, the term fusion-based prediction or fusion-based prediction process refers to methods that obtain a prediction for a block based on blending or fusing two or more prediction signals. In accordance with embodiments, a fusion-based prediction process may be a fusion-based intra prediction process, such as a decoder side intra mode derivation (DIMD), a template-based intra mode derivation (TIMD), or an occurrence-based intra coding (OBIC). In accordance with other embodiments, a fusion-based prediction process may refer to a fusion of block vector-based (BV-based) predictions, such as an intra template matching prediction (IntraTMP) or an intra block copy (IBC) prediction.

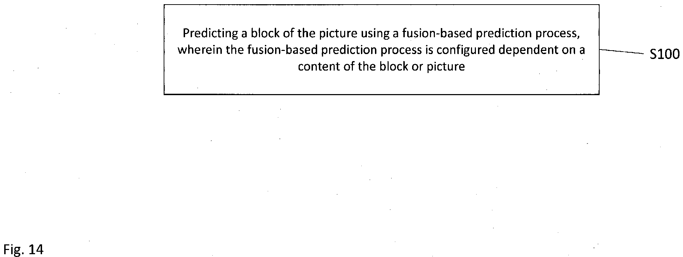

Fig. 14 illustrates a flow diagram of an embodiment of a method of processing one or more blocks of a picture. The method includes:
S100: Predicting a block of the picture using a fusion-based prediction process, wherein the fusion-based prediction process is configured dependent on a content of the block, picture or video.

Thus, in accordance with embodiments, the fusion-based prediction process or method may be configured differently based on a content that the codec is compressing. in accordance with embodiments, the fusion-based prediction method may be configured differently for screen content than for camera captured or natural content.

In accordance with embodiments, the configuration may be enabled using one or more High-Level Syntax (HLS) information, e.g., . the HLS information may be a Video parameter set (VPS), a Sequence parameter set (SPS), a Picture parameter set (PPS) or the like.

In accordance with embodiments, the fusion-based prediction method may be a fusion of multiple intra prediction modes (IPMs), such as DIMD and TIMD, or it may be a fusion of multiple block-vector based predictions, such as fusion of multiple intraTMP or IBC predictions.

In accordance with embodiments, the fusion-based prediction method may be configured, for example using an SPS flag, in a way that it uses a single prediction for a block when the SPS flag is determined to be true.

Embodiments of the present disclosure are now described with reference to fusion-based intra prediction processes or methods using multiple intra prediction modes (IPMs), such as DIMD and TIMD, however, the present disclosure is not limited to such embodiments. In accordance with other embodiment, other fusion-based prediction methods may be employed, e.g., a fusion of multiple block-vector based predictions, such as fusion of multiple intraTMP or IBC predictions.

In accordance with embodiments, the usage of fusion-based intra modes is configured depending on the underlying content that the codec is compressing. For example, in case of content with simple characteristics, such as screen content with sharp edges, a fusion of multiple intra predictions may not be necessary and even in some cases it may result in sub-optimal prediction for a given block, compared to a non-fusion single prediction method. For example, downgrading the fusion-based prediction to a single prediction type is useful when the content characteristics are simple for example screen-content, gaming content, or any content with very smooth and simple texture. In accordance with embodiments, HLS flag may be used to indicate a respective content. In general, the content type for enabling the corresponding HLS flags for using the existing fusion-based methods (as in prior art) or switching to methods of the invention may be done also in content authoring stage. On the other hand, in case of more complex content, such as natural or camera captured content, using a single intra prediction typically may not be able to capture the samples characteristics efficiently, thus, using multiple predictions may provide a more efficient prediction performance. For example, more complex content can be content with difficult texture, such as camera captured, noisy (e.g., camera noise or film grain noise), high motion etc..

In accordance with embodiments, such a configuration may be enabled using a high-level syntax information, such as a Sequence parameter set (SPS) or a Picture parameter set (PPS), for indicating the type of configuration used for a particular fusion-based intra modes. For example, the following flags may be signaled at the SPS level for a video, which indicate the choice of single or multiple intra prediction modes in DIMD, TIMD, OBIC and BV-based modes, respectively.

| | |
|---|---|
| *sps_single_ipm_dimd_flag*: | if true, enables a single IPM functionality for DIMD. |
| *sps_single_ipm_timd_flag*: | if true, enables a single IPM functionality for TIMD. |
| *sps_single_ipm_obic_flag*: | if true, enables a single IPM functionality for OBIC. |
| *sps_single_bvp_flag*: | if true, enables a single block vector prediction functionality for intraTMP or IBC modes. |

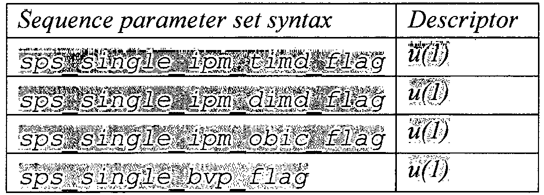

The decision for the example SPS flags may be done in different ways. In one embodiment, the encoder may decide the best configuration according to a non-normative pre-processing of input video signal or by testing different configurations during the rate-distortion optimization stage. In another embodiment, a configuration may be enabled or disabled based on the content types. In accordance with embodiments, the inventive approach may be enabled in screen content and disabled in camera captured content, and the type of content may be provided as meta-data information, or it may be derived based on an activation of other coding tools that are specific for a coding of certain type of content, like Screen Content Coding (SCC) tools, such as a Palette mode for screen content coding.

### Single prediction

In the following the screen-content is used as an example of a target content type for which a single prediction is beneficial. However, the present invention is not limited to such embodiments. In accordance with other embodiment, a single prediction is applicable also to other content types, like gaming content, graphics content, natural content with simple characteristics, etc..

In accordance with embodiments, fusion-based intra methods are configured to derive and use a single intra prediction mode for a block. According to embodiments, a best performing intra prediction mode from a fusion-based intra method, is selected and used for a block prediction when the associated High Level Syntax (HLS) flag is determined to be true.

In the following, DIMD is given as an example of a fusion-based prediction method where the inventive approach is applied. However, the present invention is not limited to such embodiments. In accordance with other embodiment, a single prediction is applicable also to other fusion-based prediction methods.

There are two approaches to determine the best performing single intra prediction: implicit and explicit.

### Implicit single prediction

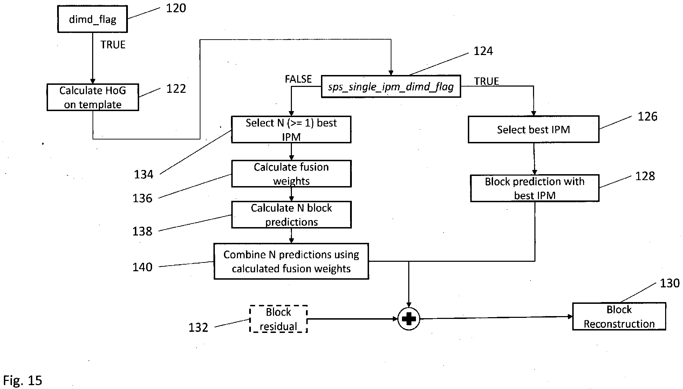

In accordance with embodiments, when using a DIMD method, in the presence of *sps_single_ipm_dimd_flag,* the DIMD process for deriving an IPM is as illustrated in Fig. 15.

Fig. 15 illustrates a DIMD mode derivation in presence of *sps_single_ipm_dimd_flag* in accordance with embodiments of the present disclosure. In this embodiment the best IPM is computed on a template, and in case of DIMD, the selection is based on the highest amplitude of the Histogram of Gradients. As is shown, the best performing prediction is determined responsive to at least one of the flags *dimd_flag* and *sps_single_ipm_dimd_flag* included in a data stream. The *dimd_flag* is received 120 in the data stream and indicates that whether the DIMD process is to be used for predicting the block. Responsive to the *dimd_flag* being true, a histogram of gradients (HoG) is determined or calculated 122 using a template region around the currently processed block. The flag *sps_single_ipm_dimd_flag* is parsed 124 from the data stream and, responsive to being true, the single prediction is to be used. The best performing prediction is selected 126 from the HoG. Then a block prediction is obtained 128 using the best performing prediction, and the block is reconstructed 130 using the block prediction 126 and a block residual 132.

Responsive to the *dimd_flag* being false, a predefined number (N) of the best performing predictions are selected 134 from the HoG, one or more fusion weights are determined 136, N block predictions are obtained 138 using the N best performing predictions, a block prediction is obtained 140 by combining the N block predictions using the one or more fusion weights, and the block is reconstructed 130 using the block prediction 140 and the block residual 132.

### Explicit single prediction

In accordance with embodiments, the best performing IPM to be used as block prediction IPMs may be decided, e.g., by an encoder, from a set of standalone IPMs in the DIMD mode, e.g., by means of rate-distortion optimization. An index of a best performing IPM from the derived set of IPMs may be indicated in a bitstream using a CU-level flag/index. The following table illustrates embodiments for a signaling mechanism for DIMD, TIMD and OBIC modes, when the associated SPS flag is present in the bitstream. The location [x0][y0] indicates the top-left corner position of the currently processed block or CU.

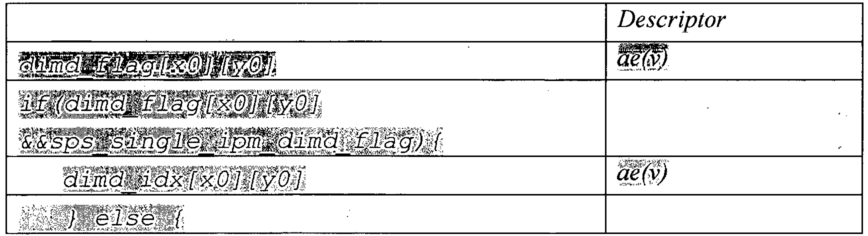

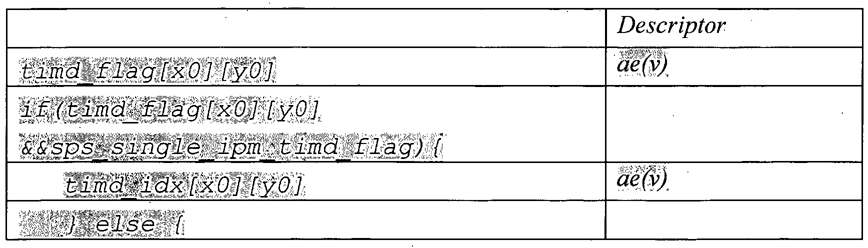

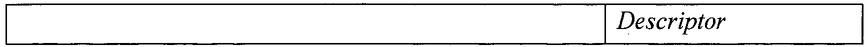

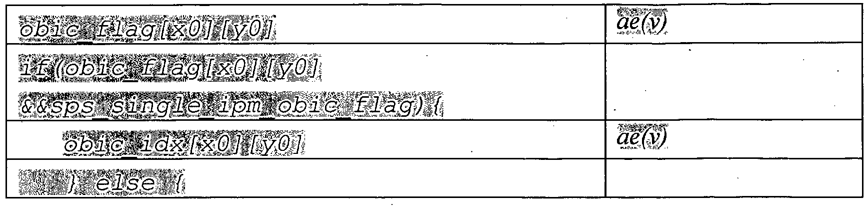

When the *DIMD flag* is parsed to be true and the *sps_single_ipm_dimd_flag,* which may be parsed as part of SPS information, is true, then an index from a pre-defined list size of individual DIMD modes is parsed. Otherwise, if the *DIMD flag* is parsed to be true and the *sps_single ipm dimd flag* is false, a conventional DIMD process is performed.

When a *TIMD flag* is parsed to be true and the *sps_single_ipm_timd_flag* (parsed as part of SPS information) is true, then an index from the pre-defined list of individual TIMD modes is parsed. Otherwise, if the *TIMD flag* is parsed to be true and the *sps_single_ipm_timd_flag* is false, a conventional TIMD process is executed.

When a *OBIC flag* is parsed to be true and the *sps_single_ipm_obic_flag* (parsed as part of SPS information) is true, then an index from the pre-defined list size of individual OBIC modes is parsed. Otherwise, if the *OBIC flag* is parsed to be true and the *sps_single_ipm_obic_flag* is false, a conventional OBIC process is executed.

### Multiple prediction

In accordance with embodiments, fusion, a set of intra modes, which is derived using fusion-based methods, may be defined as standalone modes configured for the target content using an HLS-level flag.

A DIMD method may derive up to 8 IPMs to be blended and used for a block prediction, and in accordance with embodiments, some or all of these 8 IPMs may be defined as sub-modes of the DIMD. Thus, each derived IPM is considered as block prediction choice by the codec when the associated HLS flag is enabled.

In accordance with other embodiments, the fusion-based modes may be configured in a way that the set of intra modes is reduced, e.g., from a maximum possible number of fusions, to limit a diversity of the angles. In a DIMD method, the non-angular prediction may be removed from the blending. This limitation of the fusion modes may be applied when an HLS-level flag is activated based on the content type.

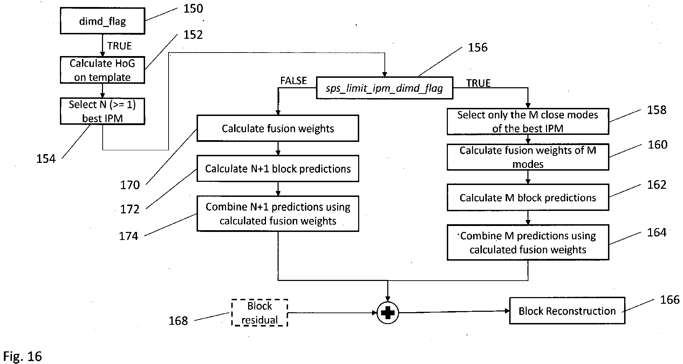

In accordance with yet other embodiments, a number of blended IPMs may be limited. Fig. 16 illustrates a DIMD mode derivation in the presence of a limit flag, sps_limit_ipm_dimd_flag, in accordance with embodiment. As is shown, the *dimd_flag* is received 150 in a data stream and indicates that whether the DIMD process is to be used for predicting the block. Responsive to the *dimd_flag* being true, a histogram of gradients (HoG) is determined or calculated 152 using a template region around the currently processed block, and the N best IPMs are selected 154 from the HoG. The flag *sps_single_ipm_dimd_flag* is parsed 156 from the data stream and, responsive to being true, M predictions are selected 158 from the plurality of predictions, with M < N, e.g., the M modes in the proximity to the best IPM. The fusion weights are determined 160 for the M predictions, M block predictions are obtained 162 using the M predictions, a block prediction is obtained 164 by combining the M block predictions using the fusion weights, and the block is reconstructed 166 using the block prediction 164 and a block residual 168.

Responsive to the *dimd_flag* being false, fusion weights for N predictions are determined 170, block predictions are obtained 172 using the N+1 predictions, a block prediction is obtained 174 by combining the N+1 block predictions using the fusion weights, and the block is reconstructed 166 using the block prediction 174 and a block residual 168.

Thus, in the embodiment of Fig. 16, in the presence of the *sps_limit_ipm_dimd_flag* a restriction is applied on the number of blended IPMs which is defined as M with M≤N. In this embodiment, only modes that are in the proximity of the best IPM are selected. Whether a mode is close enough to the best IPM, the following function ay be used: $bestIPM - thr \leq mode \leq bestIPM + thr$ with mode being one of the N best IPMs, bestIPM being the IPM with the highest amplitude in the HoG list and thr being a threshold. In that scenario a non-angular mode (e.g., planar mode) may not be blended with the selected M modes for DIMD prediction.

### Exclusion of single prediction method from other tools

When the fusion-based intra methods are configured to use a single IPM for block prediction, other existing methods in the underlying codec may consist of similar single IPM aspects that are already enabled in the fusion-based methods. Thus, there may be redundant IPMs used in different methods.

For example, the inventive single IPM DIMD method for a block may result in the same IPM as, e.g., one of the IPMs used in a MPM list of the same block. Such a redundancy of the same IPM in different fusion-based methods may result in a sub-optimal performance in terms of compression efficiency.

According to an aspect of the present disclosure, such redundant IPMs in different tools (fusion-based prediction processes) are exploited in a way that, when generating IPMs for different tools for coding a block, there are no overlaps or repeating IPMs between them. In accordance with embodiments, when the MPM list is generated, the list may be built in such a way that none of the modes are the identical or the same as when applying DIMD or TIMD in accordance with the inventive approach.

In another embodiment, instead of removing the overlapped IPMs and replacing them it with a new IPM, one may either disable the trailing method or modify it in such a way that it consists of fewer candidates and smaller signaling mechanism. In accordance with embodiments, when the DIMD and TIMD methods are configured to use a single IPM, the codec may be configured in a way that some tools, such as MPM, are disabled as it may include mostly single IPMs that are already reflected in the DIMD and TIMD with the single IPM configuration. In another embodiment, the MPM list size and/or non-MPM list size may be decreased with the same assumption that most of the candidates in the list are already part of the DIMD and TIMD list.

In yet another embodiment, when the single-IPM HLS flag is being enabled, the corresponding fusion-based mode is set to be disabled and, consequently, the CU-level information of the mode is determined to be false in the parsing stage.

In a further embodiment, when the single-IPM SPS flag is being enabled, and the corresponding fusion-based mode is set to be disabled, the IPMs of the mode may be derived and used as part of one or more other methods in the codec. For example, when DIMD method is determined to be disabled by the SPS-level flag described herein, one or more of the DIMD IPMs may be calculated and used in MPM reconstruction of the same block.

### Context coding configuration

When the fusion-based mode has been configured to the single IPM approach, in accordance with embodiments, a context coding of the associated information of the mode may be determined differently. For example, a change according to the new configuration may be one or more of the following:
- A different context initialization for the mode's information is used.
- A different binarization for the mode's information is used.
- A different coding mechanism for the mode's information is used.

In accordance with embodiments, an order of signaling of one or more of CU-level information may be changed

For example, the DIMD flag may be configured to be coded differently when *sps_single_ipm_dimd_flag* is determined to be true, For example, a different binarization or a different context initialization may be used.

The signaling order of some modes may be configured differently when *sps_single_ipm_dimd_flag* is determined to be true. For example, if a signaling order of different intra modes are configured to be as below:
*sgpmFlag → mipFlag → dimdFlag → itmpFlag → timdFlag*

In the presence of the *sps_single_ipm_dimd_flag* the signaling order may be configured as:

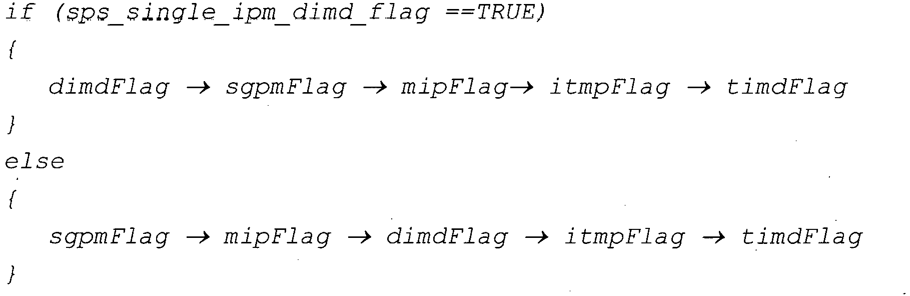

### Block vector-based mode configuration

Similar to IPM-based intra prediction mode configuration, the block vector-based methods, such as intraTMP and IBC, with multiple fusion modes may be configured differently depending on the underlying content. For example, for screen content, it may not be optimal for BV-based prediction methods to blend multiple predictions. Thus, in accordance with embodiments, such prediction methods may be configured in such a way that one or more of the following is considered:
- Disabling methods that use blending of multiple BV-based predictions which results in not signaling the associated information for that method
- Configuring the methods in such a way that the final prediction is obtained by a single BV-based prediction.
- Disabling BV-based predictions with filtering methods such as FLM and FIBC.

Such a configuration may be enabled using an HLS-level flag such as SPS. For example, *sps_single_bvp_flag* may be signaled in the SPS level that enables the methods of the present disclosure for BV-based prediction methods.

### Decoding Method

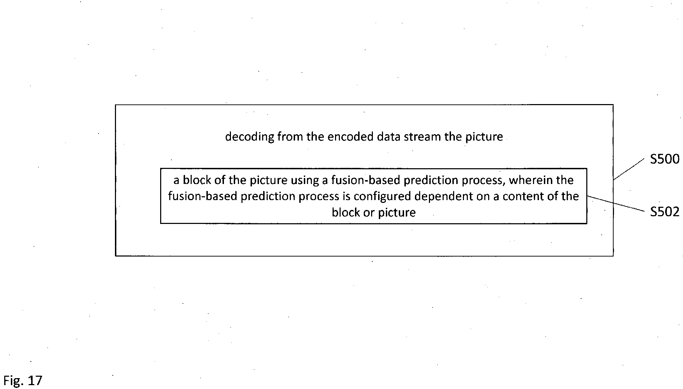

Fig. 17 illustrates a flow diagram of a method for decoding an encoded data stream, the encoded data stream including data representing a picture. The method includes the following:
S500: Decoding from the encoded data stream the picture, wherein decoding the picture comprises predicting S502 a block of the picture using a fusion-based prediction process, wherein the fusion-based prediction process is configured dependent on a content of the block or picture.

### Encoding Method

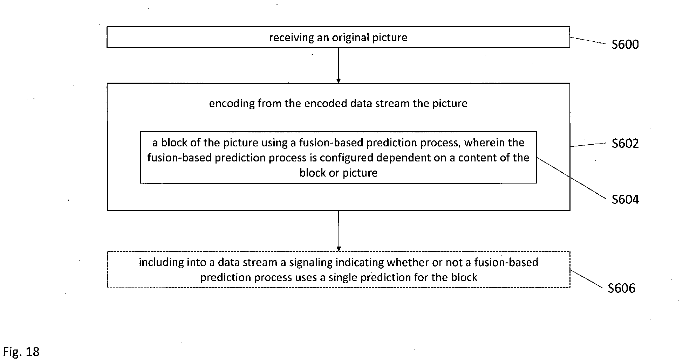

Fig. 18 illustrates a flow diagram of a method for encoding a picture into an encoded data stream. The encoded data stream includes data representing the picture and the method includes the following:
S600: Receiving an original picture.
S602: Encoding the picture into the encoded data stream, wherein encoding the picture comprises predicting S604 a block of the picture using a fusion-based prediction process, wherein the fusion-based prediction process is configured dependent on a content of the block or picture.

Optionally, the method comprises including S606 into the data stream or bitstream a signaling indicating, for a prediction of a block of the picture using a fusion-based prediction process, whether or not the fusion-based prediction process uses a single prediction for the block.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

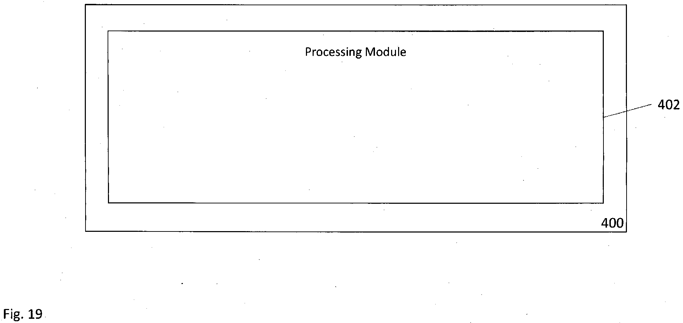

Fig. 19 illustrates a block diagram of an apparatus 400 of predicting one or more blocks of a picture in accordance with embodiments of the present disclosure. The apparatus 400 includes a processing module 402. The processing module 402 is configured to predict a block of the picture using a fusion-based prediction process, wherein the fusion-based prediction process is configured dependent on a content of the block or picture.

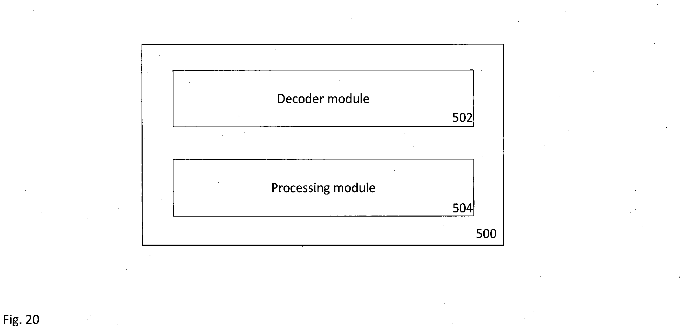

Fig. 20 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture.

504: A processing module, e.g., a prediction module 170 as depicted in Fig. 2. The processing module 502 is configured to operate in accordance with embodiments of the present disclosure. For example, the processing module 502 includes an apparatus as described with reference to Fig. 19.

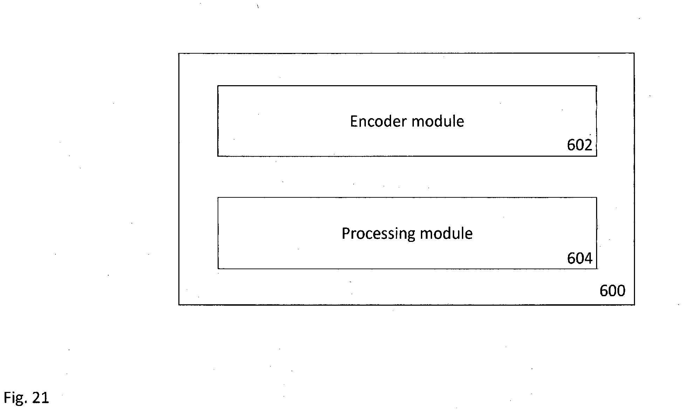

Fig. 21 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 19.

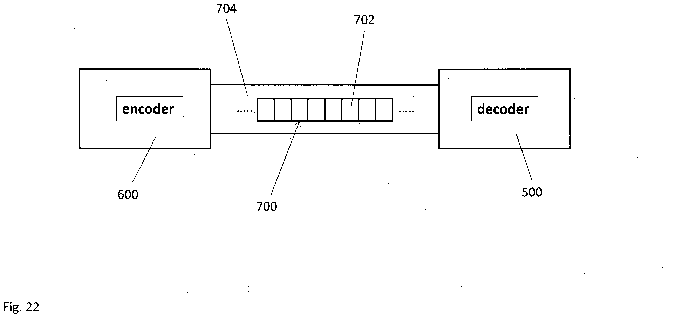

Fig. 22 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating, for a prediction of a block of the picture using a fusion-based prediction process, whether or not the fusion-based prediction process uses a single prediction for the block.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

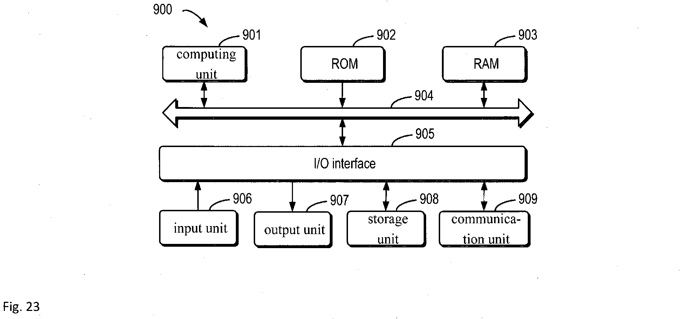

Fig. 23 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method of processing one or more blocks of a picture, the method comprising:
   predicting a block of the picture using a fusion-based prediction process,
   wherein the fusion-based prediction process is configured dependent on a content of the block or picture or dependent on signaling (e.g. first signaling or second signaling).
A 2^{nd} embodiment provides the method according to the 1^{st} embodiment, wherein, in case the content of the block or picture is of a first predefined type, like a simple content, for example, screen content, gaming content, or content with very smooth texture, the fusion-based prediction process derives and uses a single prediction for the block.
A 3^{rd} embodiment provides the method according to the 2^{nd} embodiment, wherein a best performing prediction of the fusion-based prediction process is selected and used as the single prediction for the prediction of the block.
A 4^{th} embodiment provides the method according to the 3^{rd} embodiment, wherein the best performing prediction is determined implicitly.
A 5^{th} embodiment provides the method according to the 4^{th} embodiment, wherein best performing prediction is determined responsive to at least one of
   - a first signaling, e.g., in a data stream, indicating that the fusion-based prediction process is to be used for predicting the block, and
   - a second signaling, e.g., a flag or HLS flag or HLS control flag or other signal in the data stream, indicating whether or not a single prediction is to be used.
A 6^{th} embodiment provides the method according to the 5^{th} embodiment, wherein, responsive to the first signaling, a plurality of predictions are obtained using the fusion-based prediction process.
A 7^{th} embodiment provides the method according to the 5^{th} or 6^{th} embodiment, wherein responsive to the second signaling, one or more of the plurality of predictions are used for the prediction of the block.
An 8^{th} embodiment provides the method according to the 5^{th} to 7^{th} embodiments, wherein, when the second signaling has a first value indicating that the single prediction is to be used,
   - the best performing prediction is selected from the plurality of predictions,
   - a block prediction is obtained using the best performing prediction, and
   - the block is reconstructed using the block prediction and a block residual.
A 9^{th} embodiment provides the method according to any one of the 5^{th} to 8^{th} embodiments, wherein, when the second signaling has a second value indicating that no single prediction is to be used,
   - a predefined number (N) of the best performing predictions are selected from the plurality of predictions,
   - one or more fusion weights are determined,
   - N block predictions are obtained using the N best performing predictions,
   - a block prediction is obtained by combining the N block predictions using the one or more fusion weights, and
   - the block is reconstructed using the block prediction and a block residual.
A 10^{th} embodiment provides the method according to the 3^{rd} embodiment, wherein the best performing prediction is determined explicitly.
An 11^{th} embodiment provides the method according to the 10^{th} embodiment, wherein, responsive to determining the best performing prediction from a plurality of predictions using the fusion-based prediction process, an indication of the best performing prediction is provided, e.g., in a data stream using a CU-level flag or index.
A 12^{th} embodiment provides the method according to the 10^{th} or 11^{th} embodiment, wherein the indication of the best performing prediction is obtained responsive to
   - a first signaling, e.g., in the data stream, indicating that the fusion-based prediction process is to be used for predicting the block, and
   - a second signaling, e.g., in the data stream, having a first value indicating that the single prediction is to be used.
A 13^{th} embodiment provides the method according to the 12^{th} embodiment, wherein, responsive to the second signaling having the first value,
   - the data stream is parsed for the indication of the best performing prediction,
   - a block prediction is obtained using the indicated best performing prediction among the N predefined predictions, and
   - the block is reconstructed using the block prediction and a block residual.
A 14^{th} embodiment provides the method according to the 12^{th} or 13 ^{th} embodiment, wherein, responsive to the second signaling having a second value indicating that the single prediction is not to be used,
   - the data stream is not parsed for the indication of the best performing prediction,
   - a predefined number (N) of the best performing predictions are obtained using the fusion-based prediction process,
   - one or more fusion weights are determined,
   - N block predictions are obtained using the N best performing predictions,
   - a block prediction is obtained by combining the N block predictions using the one or more fusion weights, and
   - the block is reconstructed using the block prediction and a block residual.
A 15^{th} embodiment provides the method according to the 1^{st} embodiment, wherein, in case the content of the block or picture is of a second predefined type, like a camera captured or natural content or content with difficult texture, such as camera captured, noisy (e.g., camera noise or film grain noise), high motion etc., the fusion-based prediction process derives a plurality or set of predictions.
A 16^{th} embodiment provides the method according to the 15^{th} embodiment, wherein the plurality or set of predictions includes a predefined number of predictions, e.g., a maximum possible number of predictions obtainable by the fusion-based prediction process or the N best predictions obtainable by the fusion-based prediction process.
A 17^{th} embodiment provides the method according to the 15^{th} or 16^{th} embodiment, wherein the plurality or set of predictions are standalone predictions of the fusion-based prediction process, wherein each of the standalone predictions is usable for predicting the block,
An 18^{th} embodiment provides the method according to the 17^{th} embodiment, wherein one of the standalone predictions is used for predicting the block responsive to
   - a first signaling, e.g., in a data stream, indicating that the fusion-based prediction process is to be used for predicting the block, and
   - a second signaling, e.g., in the data stream, indicating that a standalone prediction is used.
A 19^{th} embodiment provides the method according to the 18^{th} embodiment, wherein, when the second signaling has a first value indicating that one of the standalone predictions is to be used,
   - the standalone prediction to be used is selected,
   - a block prediction is obtained using the one standalone prediction, and
   - the block is reconstructed using the block prediction and a block residual.
A 20^{th} embodiment provides the method according to the 19^{th} embodiment, wherein the standalone predictions is selected dependent on one or more of the following criteria:
   - rate-distortion optimization;
   - rate-distortion optimization of the encoder.
A 21^{st} embodiment provides the method according to any one of the 18^{th} to 20^{th} embodiments, wherein responsive to the second signaling having a second value indicating that more than one of the standalone predictions is to be used,
   - one or more fusion weights are determined,
   - block predictions are obtained using the plurality or set of predictions,
   - a block prediction is obtained by combining the block predictions using the one or more fusion weights, and
   - the block is reconstructed using the block prediction and a block residual.
A 22^{nd} embodiment provides the method according to the 15^{th} or 16^{th} embodiment, wherein the plurality or set of predictions is reduced to a predefined number of predictions.
A 23^{rd} embodiment provides the method according to the 22^{nd} embodiment, wherein the plurality or set of predictions is reduced by removing one or more of the following predictions: one or more non-angular intra prediction modes (IPMs), and/or one or more of angular prediction modes, and/or one or more of non-angular prediction modes, such as planar and DC.
A 24^{th} embodiment provides the method according to the 22^{nd} or 23^{rd} embodiment, wherein the predictions are reduced such that only predictions are maintained that are in a proximity of a best prediction.
A 25^{th} embodiment provides the method according to the 24^{th} embodiment, wherein a prediction is determined to be in the proximity of the best prediction as follows: $bestPREDICTION - thr \leq PREDICTION \leq best PREDICTION + thr$ with
   - PREDICTION: one of the N best predictions,
   - best PREDICTION: prediction having a best predefined parameter among the plurality of predictions, like a highest amplitude in a Histogram of Gradients (HoG) list in case of intra prediction modes (IPMs),
   - thr: a predefined threshold, like predefined in an algorithm.
A 26^{th} embodiment provides the method according any one of the 22^{nd} to 26^{th} embodiments, wherein the plurality or set of predictions is reduced responsive to a signaling indicating a number of predictions to be blended by the fusion-based prediction process.
A 27^{th} embodiment provides the method according to the 26^{th} embodiment, wherein the plurality or set of predictions is reduced responsive to
   - a first signaling, e.g., in a data stream, indicating that the fusion-based prediction process is to be used for predicting the block, and
   - a second signaling, e.g., in the data stream, indicating whether or not the plurality or set of predictions is to be reduced.
A 28^{th} embodiment provides the method according to the 27^{th} embodiment, wherein, responsive to the first signaling,
   - a plurality of predictions are obtained using the fusion-based prediction process, and
   - the N best predictions are selected from the plurality of predictions.
A 29^{th} embodiment provides the method according to the 26^{th} or 27^{th} embodiment, wherein, responsive to the second signaling indicating that the plurality or set of predictions is to be reduced,
   - M predictions are selected from the plurality of predictions, with M < N,
   - fusion weights are determined for the M predictions,
   - M block predictions are obtained using the M predictions,
   - a block prediction is obtained by combining the M block predictions using the fusion weights, and
   - the block is reconstructed using the block prediction and a block residual.
A 30^{th} embodiment provides the method according to any one of the 26^{th} to 29^{th} embodiments, wherein, responsive to the second signaling indicating that the plurality or set of predictions is not to be reduced,
   - fusion weights for N predictions are determined,
   - block predictions are obtained using the N predictions,
   - a block prediction is obtained by combining the N block predictions using the fusion weights, and
   - the block is reconstructed using the block prediction and a block residual.
A 31^{st} embodiment provides the method according to any one of the 1^{st} to 30^{th} embodiments, wherein, for predicting the block of the picture, one of a plurality of different fusion-based prediction processes is used, and wherein predictions for the block are generated by the different fusion-based prediction processes such that between the different fusion-based prediction processes there are no overlapping or repeating predictions.
A 32^{nd} embodiment provides the method according to any one of the 1^{st} to 30^{th} embodiments, wherein, for predicting the block of the picture, one of a plurality of different fusion-based prediction processes is used, and wherein the one or more unused fusion-based prediction processes are
   - disabled so that no predictions are provided, or
   - modified such that a number of predictions is reduced.
A 33^{rd} embodiment provides the method according to any one of the 1^{st} to 32^{nd} embodiments, wherein, in case a single prediction of the one fusion-based prediction process is used, the one fusion-based prediction process is disabled.
A 34^{th} embodiment provides the method according to any one of the 1^{st} to 32^{nd} embodiments, wherein, for predicting the block of the picture, one of a plurality of different fusion-based prediction processes is used, and wherein, in case a single prediction of the one fusion-based prediction process is used, one or more of the predictions derived by the one fusion-based prediction process are used when processing the block using one of the other fusion-based prediction processes.
A 35^{th} embodiment provides the method according to any one of the 1^{st} to 34^{th} embodiments, wherein, when using a single prediction of the fusion-based prediction process, a context coding of the associated information of the prediction is changed when compared to using all predictions of the fusion-based prediction process.
A 36^{th} embodiment provides the method according to the 35^{th} embodiment, wherein the changed context coding comprises one or more of the following:
   - use of a different context initialization for the information of the prediction,
   - use of a different binarization for the information of the prediction,
   - use of a different coding mechanism for the information of the prediction,
   - change of an order of signaling, e.g., of one or more of CU-level information.
A 37^{th} embodiment provides the method according to any one of the 1^{st} to 36^{th} embodiments, wherein the fusion-based prediction process obtains a prediction for the block based on blending or fusing two or more prediction signals.
A 38^{th} embodiment provides the method according to any one of the 1^{st} to 37^{th} embodiments, wherein the fusion-based prediction process comprises one or more of the following:
   - a fusion of intra prediction modes (IPMs), e.g., by a decoder side intra mode derivation (DIMD), a template-based intra mode derivation (TIMD) or an occurrence-based intra coding (OBIC), or
   - a fusion of block-vector based (BV-based) predictions, e.g., by an intra template matching prediction (IntraTMP) or an intra block copy (IBC) prediction.
A 39^{th} embodiment provides a method for decoding a data stream, the data stream including data representing a picture, the method comprising:
   decoding from the data stream the picture,
   wherein decoding the picture comprises processing one or more blocks of the pictures according to any one of the preceding claims.
A 40^{th} embodiment provides a method for encoding a picture into a data stream, the data stream including data representing the picture, the method comprising:
   receiving an original picture, and
   encoding the picture into the data stream,
   wherein encoding the picture comprises processing one or more blocks according to any one of the 1^{st} to 38^{th} embodiments.
A 41^{st} embodiment provides a non-transitory computer-readable storage medium comprising instructions which, when executed by a computer, cause the computer to carry out the method of any one of the preceding claims.
A 42^{nd} embodiment provides an apparatus of processing one or more blocks of a picture, the apparatus comprising:
   a processing module, wherein the processing module is configured to predict a block of the picture using a fusion-based prediction process, wherein the fusion-based prediction process is configured dependent on a content of the block or picture.
A 43^{rd} embodiment provides an apparatus for decoding a data stream, the data stream including data representing a picture, the apparatus comprising:
   a decoder module configured to decode from the data stream the picture, and
   an apparatus according to the 42^{nd} embodiment.
A 44^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 42^{nd} embodiment.
A 45^{th} embodiment provides data stream having encoded thereinto a picture, wherein the data stream comprises:
   a signaling indicating, for a prediction of a block of the picture using a fusion-based prediction process, whether or not the fusion-based prediction process uses a single prediction for the block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of processing one or more blocks of a picture, the method comprising:
predicting a block of the picture using a fusion-based prediction process,
wherein the fusion-based prediction process is configured dependent on a content of the block or picture or dependent on signaling (e.g. first signaling or second signaling).

2. The method of claim 1, wherein, in case the content of the block or picture is of a first predefined type, the fusion-based prediction process derives and uses a single prediction for the block; or
wherein, in case the content of the block or picture is of a first predefined type, the fusion-based prediction process derives and uses a single prediction for the block, wherein a best performing prediction of the fusion-based prediction process is selected and used as the single prediction for the prediction of the block.

3. The method of claim 2, wherein the best performing prediction is determined implicitly.

4. The method of claim 3, wherein best performing prediction is determined responsive to at least one of
- a first signaling, e.g., in a data stream, indicating that the fusion-based prediction process is to be used for predicting the block, and
- a second signaling, e.g., a flag or HLS flag or HLS control flag or other signal in the data stream, indicating whether or not a single prediction is to be used.

5. The method of claim 4, wherein, responsive to the first signaling, a plurality of predictions are obtained using the fusion-based prediction process; and/or
wherein responsive to the second signaling, one or more of the plurality of predictions are used for the prediction of the block.

6. The method of any one of claims 3 to 5, wherein, when the second signaling has a first value indicating that the single prediction is to be used,
- the best performing prediction is selected from the plurality of predictions,
- a block prediction is obtained using the best performing prediction, and
- the block is reconstructed using the block prediction and a block residual; and/or
wherein, when the second signaling has a second value indicating that no single prediction is to be used,
- a predefined number (N) of the best performing predictions are selected from the plurality of predictions,
- one or more fusion weights are determined,
- N block predictions are obtained using the N best performing predictions,
- a block prediction is obtained by combining the N block predictions using the one or more fusion weights, and
- the block is reconstructed using the block prediction and a block residual.

7. The method of claim 2, wherein the best performing prediction is determined explicitly.

8. The method of claim 7, wherein, responsive to determining the best performing prediction from a plurality of predictions using the fusion-based prediction process, an indication of the best performing prediction is provided, e.g., in a data stream using a CU-level flag or index.

9. The method of claim 7 or 8, wherein the indication of the best performing prediction is obtained responsive to
- a first signaling, e.g., in the data stream, indicating that the fusion-based prediction process is to be used for predicting the block, and
- a second signaling, e.g., in the data stream, having a first value indicating that the single prediction is to be used.

10. The method of claim 9, wherein, responsive to the second signaling having the first value,
- the data stream is parsed for the indication of the best performing prediction,
- a block prediction is obtained using the indicated best performing prediction among the N predefined predictions, and
- the block is reconstructed using the block prediction and a block residual; and/or
wherein, responsive to the second signaling having a second value indicating that the single prediction is not to be used,
- the data stream is not parsed for the indication of the best performing prediction,
- a predefined number (N) of the best performing predictions are obtained using the fusion-based prediction process,
- one or more fusion weights are determined,
- N block predictions are obtained using the N best performing predictions,
- a block prediction is obtained by combining the N block predictions using the one or more fusion weights, and
- the block is reconstructed using the block prediction and a block residual.

11. The method of claim 1, wherein, in case the content of the block or picture is of a second predefined type, the fusion-based prediction process derives a plurality or set of predictions.

12. The method of any one of claims 1 to 11, wherein, for predicting the block of the picture, one of a plurality of different fusion-based prediction processes is used, and wherein predictions for the block are generated by the different fusion-based prediction processes such that between the different fusion-based prediction processes there are no overlapping or repeating predictions;
OR
wherein, for predicting the block of the picture, one of a plurality of different fusion-based prediction processes is used, and wherein the one or more unused fusion-based prediction processes are
- disabled so that no predictions are provided, or
- modified such that a number of predictions is reduced;
OR
wherein, in case a single prediction of the one fusion-based prediction process is used, the one fusion-based prediction process is disabled.

13. The method of any one of claims 1 to 12, wherein, for predicting the block of the picture, one of a plurality of different fusion-based prediction processes is used, and wherein, in case a single prediction of the one fusion-based prediction process is used, one or more of the predictions derived by the one fusion-based prediction process are used when processing the block using one of the other fusion-based prediction processes.

14. The method of any one of claims 1 to 13, wherein, when using a single prediction of the fusion-based prediction process, a context coding of the associated information of the prediction is changed when compared to using all predictions of the fusion-based prediction process.

15. The method of claim 14, wherein the changed context coding comprises one or more of the following:
- use of a different context initialization for the information of the prediction,
- use of a different binarization for the information of the prediction,
- use of a different coding mechanism for the information of the prediction,
- change of an order of signaling, e.g., of one or more of CU-level information.
